# EUROPEAN PATENT APPLICATION

(11) **EP 3 534 118 A1**
(43) Date of publication of application: **04.09.2019**
(21) Application number: 19159757.4
(22) Date of filing: 27.02.2019
(51) Int. Cl.: G01C 21/36, G01P 1/08

(54) **METHOD, DEVICE FOR DISPLAYING EMBLEM IN NAVIGATION AND MEDIUM**

(30) Priority: 02.03.2018 CN 201810175026
(71) Applicant: Baidu Online Network Technology (Beijing) Co., Ltd., Beijing 100085 (CN)
(72) Inventor: Yang, Ge, Haidian District, Beijing 100085 (CN); Peng, Longteng, Haidian District, Beijing 100085 (CN)
(74) Representative: Maiwald Patent- und Rechtsanwaltsgesellschaft mbH

(57) **Abstract**

Embodiments of the present disclosure disclose a method, apparatus and device for displaying an emblem in navigation and a medium, and relates to a field of navigation. The method includes: obtaining (S110) current information of a navigation terminal, in which, the current information at least includes a state of a location system, a driving speed and a driving location; and drawing (SI20) an emblem with the driving speed drawn thereon when the state of the location system indicates an enabled state, and displaying the emblem at the driving location. The method, apparatus and device for displaying the emblem in navigation and the medium provided by the present disclosure may reduce a display area occupied by information and solve the problem that the display area of the driving speed overlays the map elements below it while displaying the same amount of information.

## Description

### FIELD

The present disclosure relates to a field of navigation, and more particularly to a method for displaying an emblem in navigation, an apparatus for displaying an emblem in navigation and a device for displaying an emblem in navigation and a medium.

### BACKGROUND

At present, performing route navigation by using a navigation terminal becomes more and more important in car owners' travel. The navigation terminal may give a plurality of driving state information during navigation such that a user knows about a current driving state of a vehicle conveniently.

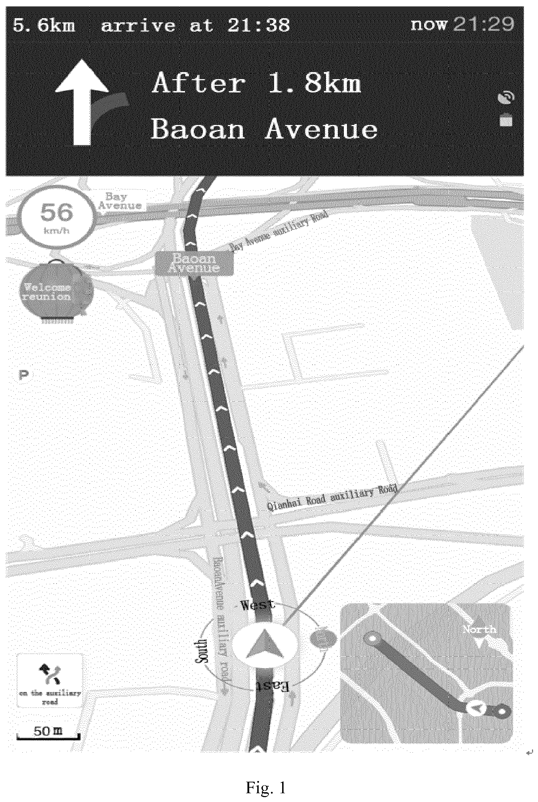

As illustrated in Fig. 1, it is general in the related art that, a display area of a driving speed may overlay map elements below it when the user drives along a planned navigation path.

### SUMMARY

The present disclosure provides a method for displaying an emblem in navigation, a device for displaying an emblem in navigation and a medium.

In a first aspect, embodiments of the present disclosure provide a method for displaying an emblem in navigation, which includes: obtaining current information of a navigation terminal, in which the current information at least includes a state of a location system, a driving speed and a driving location; and drawing an emblem with the driving speed drawn thereon when the state of the location system indicates an enabled state, and displaying the emblem at the driving location.

In an embodiment, drawing the emblem with the driving speed drawn thereon when the state of the location system indicates the enabled state, and displaying the emblem at the driving location comprises determining a display format of the emblem according to the driving speed; and drawing the emblem with the driving speed drawn thereon according to the display format, and displaying the emblem at the driving location.

In an embodiment, determining the display format of the emblem according to the driving speed comprises: determining the display format of the emblem as an over-speeding driving format when the driving speed is greater than a preset speed threshold; and determining the display format of the emblem as a navigation format when the driving speed is lower than or equal to the preset speed threshold.

In an embodiment, drawing the emblem with the driving speed drawn thereon according to the display format, and displaying the emblem at the driving location comprises: drawing the emblem with the driving speed drawn thereon according to the over-speeding driving format when the display format is the over-speeding driving format; and displaying the emblem at the driving location in a preset animation way.

In an embodiment, after obtaining the current information of the navigation terminal, the method further comprises: determining a display format of the emblem as a without-location-system format when the state of the location system is a disabled state; and drawing the emblem according to the without-location-system format, and displaying the emblem at the driving location.

In an embodiment, the driving speed is determined by acts of: obtaining a first position of the navigation terminal at a first time point and a second position of the navigation terminal at a second time point; determining a driving distance according to coordinates of the first position and the second position, determining a time difference between the first time point and the second time point; and determining the driving speed based on a ratio of the driving distance to the time difference.

In an embodiment, drawing the emblem with the driving speed drawn thereon comprises: obtaining a preset basic model of the emblem; inserting a direction sign at a preset position of the preset basic model according to a driving direction; and filling the driving speed in a preset speed editing area of the preset basic model.

In a second aspect, embodiments of the present disclosure further provide a device for displaying an emblem in navigation, which includes: an obtaining module, configured to obtain current information of a navigation terminal, wherein, the current information at least comprises a state of a location system, a driving speed and a driving location; and a display module, configured to draw an emblem with the driving speed drawn thereon when the state of the location system indicates an enabled state, and display the emblem at the driving location.

In an embodiment, the display module comprises: a display determining unit, configured to determine a display format of the emblem according to the driving speed; and a display unit, configured to draw the emblem with the driving speed drawn thereon according to the display format, and display the emblem at the driving location.

In an embodiment, the display determining unit is further configured to: determine the display format of the emblem as an over-speeding driving format when the driving speed is greater than a preset speed threshold; and determine the display format of the emblem as a navigation format when the driving speed is lower than or equal to the preset speed threshold.

In an embodiment, the display unit is further configured to: draw the emblem with the driving speed drawn thereon according to the over-speeding driving format when the display format is the over-speeding driving format; and display the emblem at the driving location in a preset animation way.

In an embodiment, after after the current information of the navigation terminal is obtained, the device further comprises: a without-location-system determining module, configured to determine a display format of the emblem as a without-location-system format when the state of the location system is a disabled state; and a without-location-system display module, configured to draw the emblem according to the without-location-system format, and display the emblem at the driving location.

In an embodiment, the driving speed is determined by acts of: obtaining a first position of the navigation terminal at a first time point and a second position of the navigation terminal at a second time point; determining a driving distance according to coordinates of the first position and the second position, determining a time difference between the first time point and the second time point; and determining the driving speed based on a ratio of the driving distance to the time difference.

In an embodiment, the display module is configured to draw the emblem with the driving speed drawn thereon by performing: drawing the emblem with the driving speed drawn thereon comprises: obtaining a preset basic model of the emblem; inserting a direction sign at a preset position of the preset basic model according to a driving direction; and filling the driving speed in a preset speed editing area of the preset basic model.

In a third aspect, embodiments of the present disclosure further provide a computer readable storage medium having stored computer programs thereon. The computer programs are configured to be executed by a processor to implement the method for displaying the emblem in navigation according to any of embodiments.

### BRIEF DESCRIPTION OF THE DRAWINGS

Fig. 1 is a schematic diagram illustrating the displaying of an emblem and a driving speed in the related art.
Fig. 2 is a flow chart illustrating a method for displaying an emblem in navigation provided in embodiment one of the present disclosure.
Fig. 3 is a schematic diagram illustrating an emblem with a driving speech drawn thereon provided in embodiment one of the present disclosure.
Fig. 4 is schematic diagram illustrating an emblem in a without-location-system format provided in embodiment one of the present disclosure.
Fig. 5 is a flow chart illustrating a method for displaying an emblem in navigation provided in embodiment two of the present disclosure.
Fig. 6a is a schematic diagram illustrating an emblem in an over-speeding driving format provided in embodiment two of the present disclosure.
Fig. 6b is a schematic diagram illustrating an emblem in a navigation format provided in embodiment two of the present disclosure.
Fig. 7 is a block diagram illustrating a device for displaying an emblem in navigation provided in embodiment three of the present disclosure.
Fig. 8 is a block diagram illustrating a terminal provided in embodiment four of the present disclosure.

### DETAILED DESCRIPTION

Description will be made in detail below to the accompanying drawings and embodiments. It should be understood that, detailed embodiments described herein are only intended to explain the present disclosure and do not be understood a limitation of the present disclosure. In addition, it should be further noted that, for the convenience of description, only some but not all of the structures related to the present disclosure are shown in the drawings.

### Embodiment one

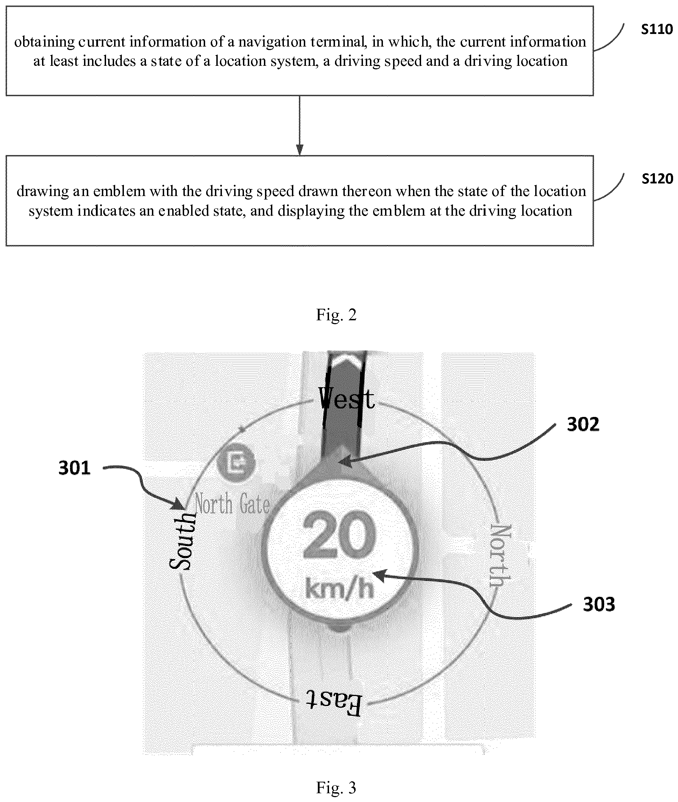

Fig. 2 is a flow chart illustrating a method for displaying an emblem in navigation provided in embodiment one of the present disclosure. The embodiment may be applicable to a situation that the emblem is displayed when a user a vehicle with a navigation terminal along a navigation path. The method may be executed by a device of displaying the emblem in the navigation, and the device may be implemented in form of software and/or hardware. Typically, the device may be a navigation terminal (such as a phone with a navigation function, vehicle navigation). As illustrated in Fig. 2, the method for displaying the emblem in navigation provided in embodiments includes the followings.

In block S110, current information of a navigation terminal is obtained, in which the current information at least includes a state of a location system, a driving speed and a driving location.

The state of the location system indicates whether the location system of the navigation terminal is enabled, which may be an enabled state or a disabled state. Alternatively, the location system may be the Global Positioning System, and may be the Beidou Positioning System.

The driving speed indicates a current driving speed of a vehicle where the navigation terminal is installed, and specifically may be 50 kilometers per hour.

The driving speed may be determined according to a ratio of a driving distance to a time difference between different time points. Typically, a first position of the navigation terminal at a first time point and a second position of the navigation terminal at a second time point are obtained; the driving distance is determined based on coordinates of the two positions, or a length of route between the first position and the second position in the navigation route is determined as the driving distance; the time difference between the first time point and the second time point is determined; and the driving speed is determined based on the ratio of the driving distance to the time difference.

The driving location indicates a current location of the vehicle where the navigation terminal is installed, and specifically may be determined according to the location determined by the location system for the navigation terminal.

In block S120, an emblem with the driving speed drawn thereon is drawn when the state of the location system indicates an enabled state, and the emblem is displayed at the driving location.

The emblem is a label indicating the driving location of the vehicle.

Alternatively, the driving speed may be drawn at any position of the emblem, to clearly display the driving speed while occupying the display area as little as possible.

Typically, the procedure of drawing the emblem with the driving speed drawn thereon may be as follows. A basic model of the emblem is preset. A position, a driving direction and a driving speed of the vehicle having the navigation terminal installed are obtained. As illustrated in Fig. 3, the position of the vehicle is marked in a position editing area 301 of the basic model, a direction sign 302 is inserted at a preset position of the basic model according to the driving direction of the vehicle, to instruct the driving direction of the vehicle, and the driving speed is filled in a preset speed editing area 303 of the basic model.

It should be noted that, the time sequence of the steps of editing the basic model according to the position, the driving direction and the driving speed of the vehicle is not limited herein. Alternatively, the driving speed may be edited into the basic model first, then the driving direction may be edited into the basic model, finally the position of the vehicle is edited into the basic model. In another example, the position of the vehicle may be edited into the basic model firstly, then the driving direction is edited into the basic model, finally the driving speed is edited into the basic model. There are other execution orders, which are not elaborated herein.

With the technical solution of the present disclosure, by drawing the driving speed on the emblem, the driving speed and the emblem can be displayed together, such that the driving speed and the emblem occupy only one display area, thereby avoiding occupation of the display area of the driving speed, and simultaneously solving the problem that the map elements may be overlaid with the display area of the driving speed.

In order to display information in the disabled state of the location system without occupying the display area, so as to remind the user, after obtaining the current information of the navigation terminal, which includes at least the state of the location system, the driving speed and the driving location, the method further includes: determining a display format of the emblem as a without-location-system format when the state of the location system is a disabled state; and drawing the emblem according to the without-location-system format, and displaying the emblem at the driving location.

The without-location-system format may be defined based on actual needs.

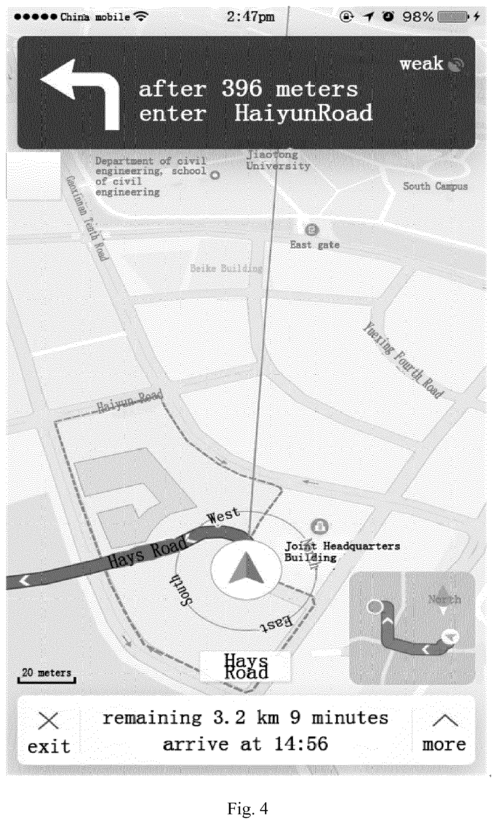

Typically, as illustrated in Fig. 4, the emblem in the without-location-system format may be a gray emblem without the driving speed and driving location drawn thereon.

In order to display information of the driving speed of the vehicle without occupying the display area, so as to remind the user, when the location system indicates the enabled state, drawing the emblem with the driving speed drawn thereon and displaying the emblem at the driving location includes: determining a display format of the emblem according to the driving speed; and drawing the emblem with the driving speed drawn thereon according to the display format, and displaying the emblem at the driving location.

Alternatively, the driving speed can be divided into a plurality of ranges, and each range corresponds to a display format. Detailed display formats of the emblem may be determined based on the actual needs.

### Embodiment two

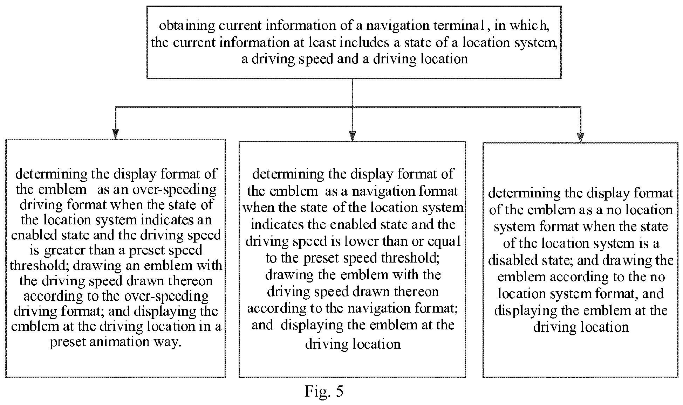

Fig. 5 is a flow chart illustrating a method for displaying an emblem in navigation provided in embodiment two of the present disclosure. The embodiment is an alternative solution provided on the basis of the foregoing embodiment. As illustrated in Fig. 5, the method for displaying the emblem in navigation provided in the present disclosure may be implemented as follows.

Current information of a navigation terminal is obtained, in which, the current information at least includes a state of a location system, a driving speed and a driving location.

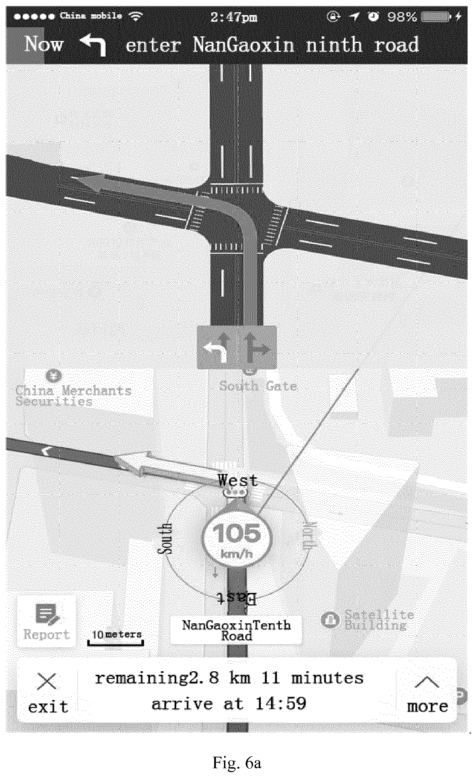

A display format of the emblem is determined as an over-speeding driving format when the state of the location system indicates an enabled state and the driving speed is greater than a preset speed threshold. An emblem with the driving speed drawn thereon is drawn according to the over-speeding driving format, and the emblem is displayed at the driving location in a preset animation way, as illustrated in Fig. 6a.

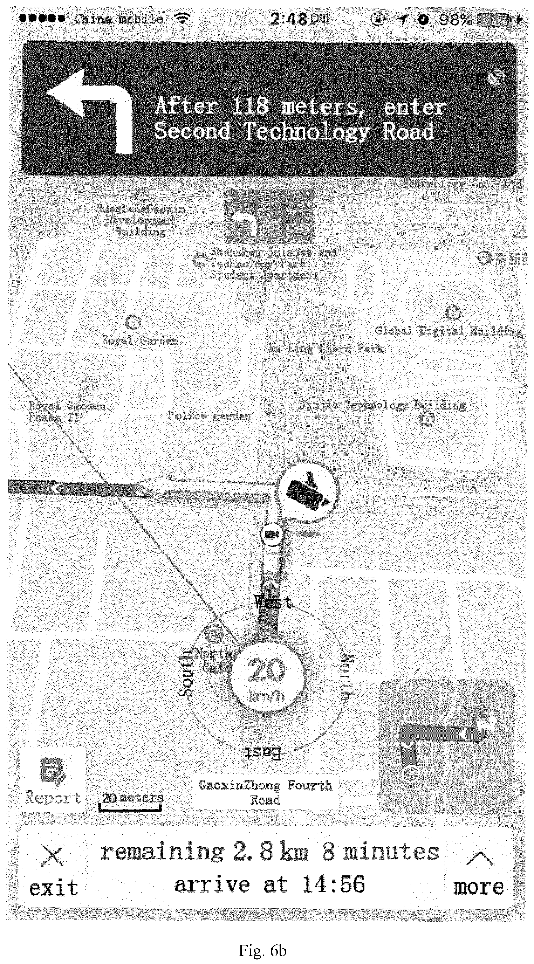

The display format of the emblem is determined as a navigation format when the state of the location system indicates the enabled state and the driving speed is lower than or equal to the preset speed threshold. The emblem with the driving speed drawn thereon is drawn according to the navigation format, and the emblem is displayed at the driving location, as illustrated in Fig. 6b.

The display format of the emblem is determined as a without-location-system format when the state of the location system indicates a disabled state. The emblem is drawn according to the without-location-system format, and the emblem is displayed at the driving location.

All the speed threshold, the navigation format, the over-speeding driving format and the preset animation may be set based on the actual needs.

Alternatively, different display formats may be distinguished by setting the emblems with different shapes different colors.

Typically, the preset animation above may a breathing animation. In the navigation format, blue color is chosen, and in the over-speeding driving format, red color is chosen.

With the technical solution provided in embodiments of the present disclosure, by drawing the emblem in the over-speeding driving format when the driving speed is greater than the preset speed threshold, and displaying the emblem in the navigation format when the driving speed is lower than or equal to the preset speed threshold, the user may know about whether the vehicle is over-speeding according to different display formats of the emblem. In addition, by displaying the emblem in the over-speeding driving format with the animation effect, the user may be reminded intuitively, such that the indicating effect is enhanced.

It should be noted that, the skilled in the related art will have motivation to combine implementations described in the foregoing embodiments with the technical guidance of the embodiment, to implement the displaying of the emblem with the driving speed drawn thereon.

### Embodiment three

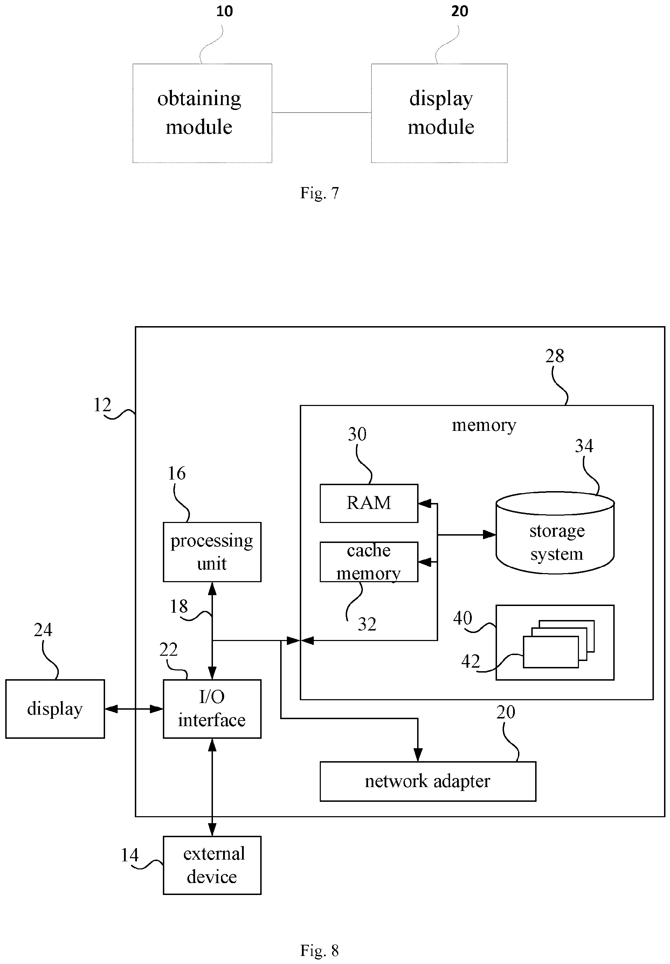

Fig. 7 is a block diagram illustrating a device for displaying an emblem in navigation provided in embodiment three of the present disclosure. As illustrated in Fig. 7, the device for displaying the emblem in navigation provided in the embodiment includes: an obtaining module 10 and a display module 20.

The obtaining module 10 is configured to obtain current information of a navigation terminal, in which, the current information at least includes a state of a location system, a driving speed and a driving location.

The display module 20 is configured to draw an emblem with the driving speed drawn thereon when the state of the location system indicates an enabled state, and display the emblem at the driving location.

With the technical solution of the present disclosure, by drawing the driving speed on the emblem, the driving speed and the emblem are displayed together, such that the driving speed and the emblem occupy only one display area, thereby avoiding occupation of the display area of the driving speed, and simultaneously solving the problem that the display area of the driving speed overlays the map elements below it.

Further, the display module 20 includes: a display determining unit and a display unit.

The display determining unit is configured to determine a display format of the emblem according to the driving speed.

The display unit is configured to draw the emblem with the driving speed drawn thereon according to the display format, and display the emblem at the driving location.

Further, the display determining unit is specifically configured to: determine the display format of the emblem as an over-speeding driving format when the driving speed is greater than a preset speed threshold; and determine the display format of the emblem as a navigation format when the driving speed is lower than or equal to the preset speed threshold.

Further, the display unit is specifically configured to: draw the emblem with the driving speed drawn thereon according to the over-speeding driving format when the display format is the over-speeding driving format; and display the emblem at the driving location in a preset animation way.

Further, the device for displaying the emblem in navigation further includes: a without-location-system determining module and a without-location-system display module.

The without-location-system determining module is configured to determine the display format of the emblem as a without-location-system format when the state of the location system indicates a disabled state after the current information of the navigation terminal is obtained, in which, the current information at least includes the state of the location system, the driving speed and the driving location.

The without-location-system display module is configured to draw the emblem according to the without-location-system format, and display the emblem at the driving location.

### Embodiment four

Fig. 8 is a block diagram illustrating a terminal provided in embodiment four of the present disclosure, which illustrates a diagram suitable to implement the exemplary terminal 12 of the present disclosure implementation. The terminal 12 displayed in Fig. 8 is only an example, and does not limit to functions and using scope of embodiments of the present disclosure.

As illustrated in Fig, 8, the terminal 12 is embodied in the form of a general purpose computer device. Assemblies of the terminal 12 may include but be not limited to: one or more processors or a processing unit 16, a system memory 28, and a bus 18 connecting different system assemblies (including the system memory 28 and the processing unit 16).

The bus 18 represents one or more of several bus structures, including a storage bus or a storage controller, a peripheral bus, a graphic accelerating port and a processor or a local bus with any bus structure in various bus structures. For example, these architectures include but are not limited an ISA (Industry Standard Architecture), a bus, a MAC (Micro Channel Architecture) bus, an enhanced ISA bus, a VESA (Video Electronics Standards Association) local bus and a PCI (Peripheral Component Interconnection) bus.

The terminal 12 typically includes various computer system readable mediums. These mediums may be any usable medium that may be accessed by the terminal 12, including volatile mediums and non-volatile mediums, removable and non-removable mediums.

The system memory 28 may include computer system readable mediums in the form of the volatile mediums, such as a RAM (Random Access Memory) 30 and/or a cache memory 32. The terminal 12 may further include other removable/non-removable, volatile/non-volatile computer system storage mediums. Only as an example, the storage system 34 may be configured to read and write non-removable, non-volatile magnetic mediums (not illustrated in Fig. 8, which may be usually called as "a hard disk driver"). Although not illustrated in Fig. 8, the storage system 28 may provide a hard disk driver configured to read and write the removable non-volatile magnetic disc (such as "a diskette"), and an optical disc driver configured to read and write a removable non-volatile disc (such as a CD-ROM (Compact Disc Read Only Memory), a DVD-ROM (Digital Video Disc Read Only Memory) or other optical mediums). Under these circumstances, each driver may be connected with the bus 18 via one or more data medium interfaces. The system memory 28 may include at least one program product, the program product has a set of program modules (such as at least one), and these program modules are configured to execute functions of each embodiment of the present disclosure.

A program/utility 40, having a set (at least one) of program modules 42, may be stored in the system memory 28. The program modules 42 include but are not limited to an operating system, one or more application programs, other program modules, and program data. Each of examples may include an implementation of a networking environment. The program module 42 usually executes functions and/or methods described in embodiments of the present disclosure.

The terminal 12 may communicate with one or more external apparatuses 14 (such as a keyboard, a pointing device, a display 24), further may communicate with one or more devices enabling user interaction with the terminal 12, and/or may communicate with one or more other computer devices (such as a network card, modem). Such communication may occur via an Input / Output (I/O) interface 22. And, the terminal 12 further may communicate with one or more networks (such as LAN (Local Area Network), WAN (Wide Area Network) and/or public network, such as Internet) via a network adapter 20. As illustrated in Fig. 8, the network adapter 20 communicates with other modules of the terminal 12 via the bus 18. It should be understood that, although not illustrated in Fig.8, other hardware and/or software modules may be used in combination with the terminal 12, including but not limited to: microcode, device drivers, redundant processing units, external disk drive arrays, RAID (Redundant Array of Independent Disks) systems, tape drives, and data archival storage systems, etc..

The processing unit 16, by running programs stored in the system medium 28, executes various function applications and data processing, for example implementing a method for displaying an emblem in navigation as described in the above embodiments.

### Embodiment five

Embodiments of the present disclosure further provide a computer readable storage medium, having stored computer programs thereon, the computer programs are executed by a processor to implement the method for displaying the emblem in navigation according any of embodiments of the present disclosure. The method includes: obtaining current information of a navigation terminal, in which, the current information at least includes a state of a location system, a driving speed and a driving location; and drawing an emblem with the driving speed drawn thereon when the state of the location system indicates an enabled state, and displaying the emblem at the driving location.

The computer readable storage medium provided in embodiments of the present disclosure may employ any combination of one or more computer readable mediums. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (an non-exhaustive list) of the computer-readable storage media include: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The computer readable signal medium may further be any tangible medium including or storing programs, which may be used by or in combination with an instruction executing system, an apparatus or a device.

A computer readable signal medium may include a propagated data signal with computer readable program code embodied therein, for example, in baseband or as part of a carrier wave. Such the propagated data signal may take any of a variety of forms, including but not limited to an electro-magnetic signal, an optical signal, or any suitable combination thereof. The computer readable signal medium may be any computer readable medium other than a computer readable storage medium. The computer readable medium can communicate, propagate, or transmit a program for use by or in connection with an instruction processing system, apparatus, or device.

The program codes included computer readable medium may be transmitted by any appropriate medium, including but not limited to wireless, wired, cable, RF, etc. , or any suitable combination of the foregoing.

The software and program codes for implementing the present disclosure may be programmed using one program language or the combination of a plurality of program languages, including object-oriented languages like Java, Smalltalk, C++, etc., and the traditional procedural languages like C language or other similar languages. The computer readable program code may be executed entirely on the user's computer, partly on the user's computer, as a stand-alone software package, partly on the user's computer and partly on a remote computer or entirely on the remote computer or server. In the latter scenario, the remote computer may be connected to the user's computer through any type of network including a local area network (LAN) or a wide area network (WAN), or connected to an external computer (for example, through the Internet using an Internet Service Provider).

It should be noted that, the above descriptions are only preferred embodiments of the present disclosure and the techniques principles applied. The skilled in the related art should be understood that, the present disclosure is not limited to specific embodiments herein, and various changes and adjustments and substitutions may be performed by the skilled in the related art without departing from scope of the present disclosure. Therefore, although illustration is made in detail to the present disclosure according to the foregoing embodiments, the present disclosure is not only the foregoing embodiments, and may further include more other equivalent embodiments without departing from spirit of the present disclosure. The scope of the present disclosure is decided by the accompanying claims.

## Claims

1. A method for displaying an emblem in navigation, comprising:
obtaining (S110) current information of a navigation terminal, wherein, the current information at least comprises a state of a location system, a driving speed and a driving location; and
drawing (S120) an emblem with the driving speed drawn thereon when the state of the location system indicates an enabled state, and displaying the emblem at the driving location.

2. The method according to claim 1, wherein drawing the emblem with the driving speed drawn thereon when the state of the location system indicates the enabled state, and displaying the emblem at the driving location comprises:
determining a display format of the emblem according to the driving speed; and
drawing the emblem with the driving speed drawn thereon according to the display format, and displaying the emblem at the driving location.

3. The method according to claim 2, wherein, determining the display format of the emblem according to the driving speed comprises:
determining the display format of the emblem as an over-speeding driving format when the driving speed is greater than a preset speed threshold; and
determining the display format of the emblem as a navigation format when the driving speed is lower than or equal to the preset speed threshold.

4. The method according to claim 3, wherein drawing the emblem with the driving speed drawn thereon according to the display format, and displaying the emblem at the driving location comprises:
drawing the emblem with the driving speed drawn thereon according to the over-speeding driving format when the display format is the over-speeding driving format; and
displaying the emblem at the driving location in a preset animation way.

5. The method according to any of claims 1-4, after obtaining the current information of the navigation terminal, further comprising:
determining a display format of the emblem as a without-location-system format when the state of the location system is a disabled state;
drawing the emblem according to the without-location-system format, and displaying the emblem at the driving location.

6. The method according to any of claims 1-5, wherein the driving speed is determined by acts of:
obtaining a first position of the navigation terminal at a first time point and a second position of the navigation terminal at a second time point;
determining a driving distance according to coordinates of the first position and the second position, determining a time difference between the first time point and the second time point; and
determining the driving speed based on a ratio of the driving distance to the time difference.

7. The method according to any of claims 1-6, wherein drawing the emblem with the driving speed drawn thereon comprises:
obtaining a preset basic model of the emblem;
inserting a direction sign at a preset position of the preset basic model according to a driving direction; and
filling the driving speed in a preset speed editing area of the preset basic model.

8. A device for displaying an emblem in navigation, comprising:
an obtaining module (10), configured to obtain current information of a navigation terminal, wherein, the current information at least comprises a state of a location system, a driving speed and a driving location; and
a display module (20), configured to draw an emblem with the driving speed drawn thereon when the state of the location system indicates an enabled state, and display the emblem at the driving location.

9. The device according to claim 8, wherein the display module comprises:
a display determining unit, configured to determine a display format of the emblem according to the driving speed; and
a display unit, configured to draw the emblem with the driving speed drawn thereon according to the display format, and display the emblem at the driving location.

10. The device according to claim 9, wherein the display determining unit is further configured to:
determine the display format of the emblem as an over-speeding driving format when the driving speed is greater than a preset speed threshold; and
determine the display format of the emblem as a navigation format when the driving speed is lower than or equal to the preset speed threshold.

11. The device according to claim 10, wherein the display unit is further configured to:
draw the emblem with the driving speed drawn thereon according to the over-speeding driving format when the display format is the over-speeding driving format; and
display the emblem at the driving location in a preset animation way.

12. The device according to claim 8, after the current information of the navigation terminal is obtained, the device further comprising:
a without-location-system determining module, configured to determine a display format of the emblem as a without-location-system format when the state of the location system is a disabled state;
a without-location-system display module, configured to draw the emblem according to the without-location-system format, and display the emblem at the driving location.

13. The device according to any of claims 8-12, wherein the driving speed is determined by performing:
obtaining a first position of the navigation terminal at a first time point and a second position of the navigation terminal at a second time point;
determining a driving distance according to coordinates of the first position and the second position, determining a time difference between the first time point and the second time point; and
determining the driving speed based on a ratio of the driving distance to the time difference.

14. The device according to any of claims 8-13, wherein the display module is configured to draw the emblem with the driving speed drawn thereon by performing:
obtaining a preset basic model of the emblem;
inserting a direction sign at a preset position of the preset basic model according to a driving direction; and
filling the driving speed in a preset speed editing area of the preset basic model.

15. A computer readable storage medium having stored computer programs thereon, wherein the computer programs are configured to be executed by a processor to implement the method for displaying the emblem in navigation according to any of claims 1-7.
